(19) 

Europäisches
Patentamt
European
Patent Office
Office européen
des brevets

(11) **EP 2 037 415 A1**

(12) **EUROPEAN PATENT APPLICATION**

(43) Date of publication:
**18.03.2009 Bulletin 2009/12**

(51) Int Cl.:
*G06T 11/60* (2006.01)

(21) Application number: **07270053.7**

(22) Date of filing: **17.09.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Picsel (Research) Limited
Glasgow G51 4BP (GB)**

(72) Inventors:
• **Nelson, Stephen**
**Glasgow, G41 2ED (GB)**
• **Anwar, Majid**
**Glasgow, G46 6SF (GB)**

(74) Representative: **Cooper, John
Murgitroyd & Company
165-169 Scotland Street
Glasgow G5 8PL (GB)**

(54) **Systems and methods for generating visual representations of graphical data and digital
document processing**

(57)     A method, and associated systems and computer programs, for generating a visual display of graphical data in a client-server system, comprises: at the server, processing source data to generate a stream of graphical elements that are to be displayed, in combination, at the client, and transmitting said stream to the client; at the client, receiving said stream of graphical elements and progressively updating a display to display a combination of said graphical elements as they are received. At least one approximate visual representation of the combination of said graphical elements is included in said stream of graphical elements and displayed by the client during said progressive updating of the display. The stream of graphical elements may include a plurality of approximate visual representations of successively improving quality, interspersed among said graphical elements.

**Fig. 6**

A

B

C

D

**Description**

**Field of the Invention**

The invention relates to data processing methods and systems. More particularly, the invention relates to methods and systems for processing "graphical data" and "digital documents" (as defined herein) and to devices incorporating such methods and systems. In general terms, the invention is concerned with generating visual displays of source data and documents, and is particularly relevant to the display of streaming media.

**Background to the Invention**

As used herein, the terms "graphical data", "graphical object" and "digital document" are used to describe a digital representation of any type of data processed by a data processing system which is intended, ultimately, to be output in some form, in whole or in part, to a human user, typically by being displayed or reproduced visually (e.g. by means of a visual display unit or printer), or by text-to-speech conversion, etc. Such data, objects and documents may include any features capable of representation, including but not limited to the following: text; graphical images; animated graphical images; full motion video images; interactive icons, buttons, menus or hyperlinks. A digital document may also include non-visual elements such as audio (sound) elements. A digital document generally includes or consists of graphical data and/or at least one graphical object.

Data processing systems, such as personal computer systems, PDAs etc. are typically required to process "digital documents", which may originate from any one of a number of local or remote sources and which may exist in any one of a wide variety of data formats ("file formats"). In order to generate an output version of the document, whether as a visual display or printed copy, for example, it is necessary for the computer system to interpret the original data file and to generate an output compatible with the relevant output device (e.g. monitor, or other visual display device, or printer).

WO01/80178 describes digital document processing systems and methods wherein, when redrawing a visual display of graphical data so that a current display is replaced by an updated display, the current display is initially replaced with a first approximate representation of the updated display while the final updated display is being generated off-screen, and then replacing the approximate representation with the final updated display. This provides the user with an indication of the content that is to be displayed while the final display is being processed for on-screen rendering. The delay in rendering the final display can be quite significant when the source data is very complex and/or where data is being streamed, for example, from a server to a thin client over a network connection. The methods described in WO01/80178 include the use of successively improving approximations of the final display being displayed while the final display is being generated.

In client-server systems where graphical data is streamed from the server to the client as a stream of graphical objects, it is common for the display at the client end to be progressively updated as the streamed objects are received. Where the graphical data is very complex in nature there may be a significant delay before any useful information is displayed at the client end and further delay before the complete data is displayed.

**Summary of the Invention**

It is an object of the present invention to provide methods, systems and computer program products for processing graphical data, graphical objects and digital documents, which obviate or mitigate the aforesaid disadvantages of known methods and systems.

In the present description and claims, the term "graphical data" is used to refer generally to whatever information is to be displayed visually. The term "source data" refers to data that encodes the graphical data in any suitable predetermined format and which must be processed in order to enable the graphical data to be displayed visually. The term "graphical" encompasses any kind of information that can be represented in a visual display.

It will be understood that, while it is generally preferable that an initial approximate visual representation of the graphical data - as referred to in the present claims - should be the first thing to be displayed in accordance with the present method, it is not strictly necessary that this be the case; i.e. one or more of the graphical elements as referred to in the claims may be displayed at full quality prior to an initial approximate representation.

The invention, in its various aspects, is defined in the claims appended hereto. Further aspects and features of the invention will be apparent from the following description.

**Brief Description of the Drawings**

Embodiments of the invention will now be described, by way of example only, with reference to the accompanying drawings in which:

Fig. 1 is a schematic representation of an example of a visual display of graphical data comprising a plurality of graphical objects.

Figs. 2A - 2D illustrate the manner in which the display of Fig. 1 is progressively updated as its component objects are decoded/retrieved.

Fig. 3 illustrates the manner in which an approximate representation of the display would be employed in the scenario of Figs. 1 and 2 in accordance with the prior art.

Figs. 4A - 4D illustrate the manner in which an approximate representation of the display would be employed in the scenario of Figs. 1 and 2 in accordance with the present invention.

Figs. 5A - 5D illustrate the manner in which a display of an image comprising a plurality of graphical objects would be progressively updated using a prior art method.

Figs. 6A - 6D provide a comparative illustration of how the image of Fig. 5 would be progressively updated using a method according to the present invention.

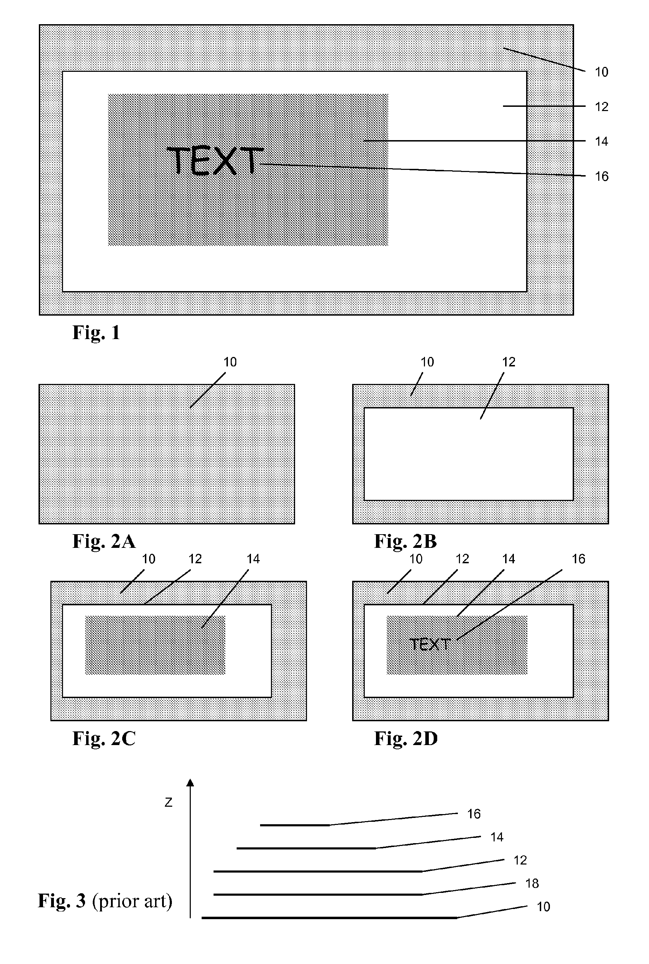

Referring now to the drawings, Fig. 1 shows a simple example of a display of graphical data for the purposes of illustrating embodiments of the present invention. The display comprises a background 10 (i.e. whatever would be displayed in the absence of graphical data represented by the source data of interest), and graphical objects 12, 14 and 16. The objects may be represented by source data in any of a variety of formats. The objects are decoded and rendered for display by any suitably programmed data processing system.

Certain embodiments of the present invention are particularly concerned with data formats in which objects are encoded individually as an ordered "stack" of objects and are decoded and rendered in stack order, so that the final display is rendered progressively, with multiple screen updates, as the objects are decoded, as illustrated in Figs. 2A - 2D.

Fig. 3 represents the background 10 and objects 12-16 of Figs. 1 and 2 stacked in "z-order", together with an additional object 18 which is an approximate representation (such as a low-resolution bitmap) of the combination of the objects 12-16, as discussed above in the introductory part of the present description. If the approximate representation 18 is retrieved and displayed first then, with conventional rendering techniques, it will be obscured from view (overwritten) when the next object 12 is rendered.

The present invention provides a method whereby an approximate representation of this type will not be obscured during stack order rendering of graphical objects.

The present method involves retrieving and displaying an initial approximate visual representation of the graphical data as before, and progressively retrieving and displaying the graphical data, which is processed from source data representing a plurality of graphical elements (objects), for full quality on-screen rendering.

In order to prevent the initial approximate representation from being obscured by subsequent objects while the graphical data is being retrieved and/or the source data is being processed for full quality on-screen rendering, the display is progressively updated by blending the approximate representation with elements of the graphical data that have been retrieved for full quality on-screen rendering.

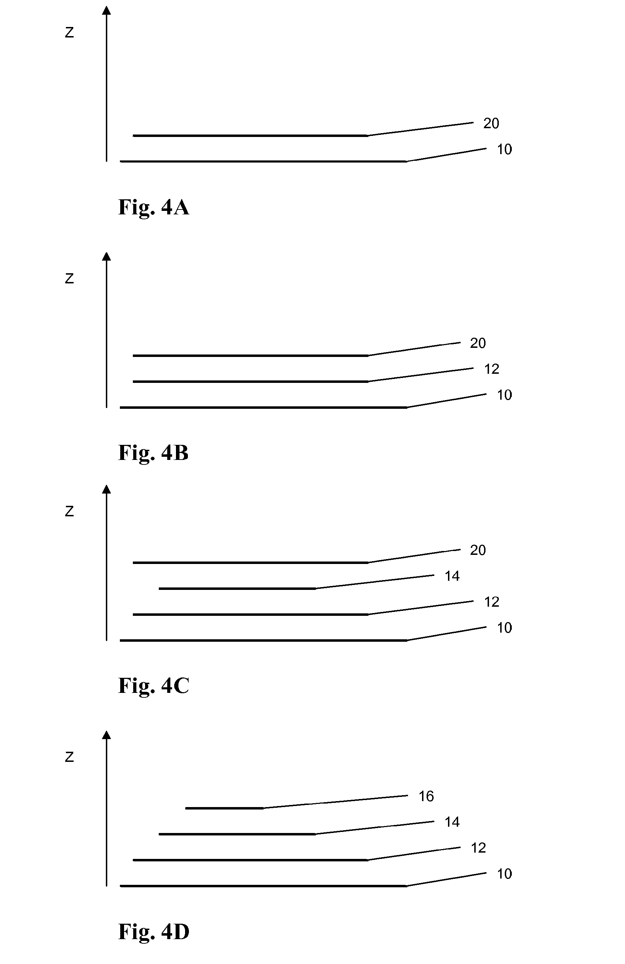

This blending has the effect of presenting the approximate representation as a partially transparent overlay on top of the retrieved elements of graphical data, as illustrated in Figs. 4A - 4D, in which the approximate representation is designated by reference numeral 20 and the graphical objects are designated 12 - 16 as in Figs. 1 - 3. As seen in Figs. 4A - 4C, the approximate representation 20 is rendered first (Fig. 4A). When the first graphical object 12 is rendered, it is blended with the approximate representation 20, so that the latter appears as a partially transparent overlay on top of the first object 12 (Fig. 4B). When the second graphical object 14 is retrieved, it is combined with the first object 12 in the usual manner and the combination is blended with the approximate representation (Fig. 4C). This may be repeated for any number of graphical objects. When the final object 16 is rendered, the approximate representation 20 may be removed (Fig. 4D) as discussed further below.

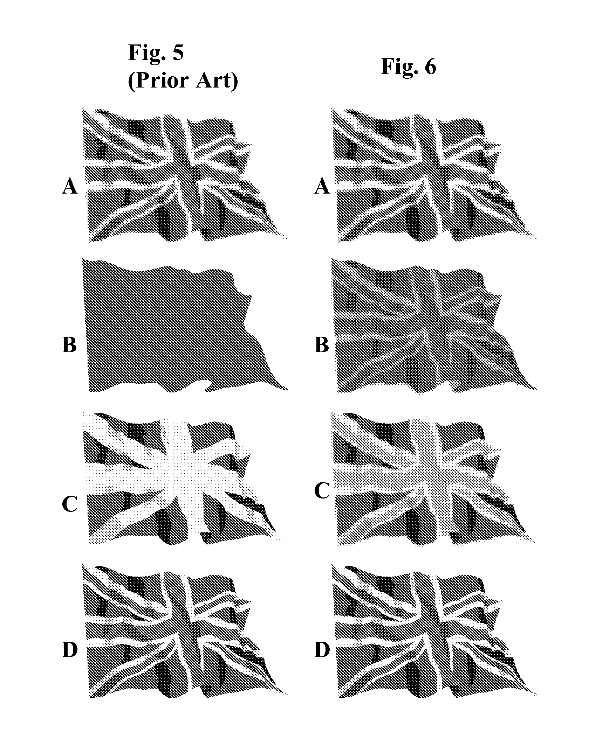

The visual effect of the present method in comparison with a prior art method such as that of WO01/80178 (referenced above) is illustrated in Figs. 5A-D (prior art) and Figs. 6A-D (present method). In each case the initial display A is of a low resolution version of the final, full quality image D. In Fig. 5, the first fully rendered object at B completely obscures the initial low resolution version A. Successive objects are rendered on top of the first object B in successive display updates at C and D. Once the initial low resolution display has been obscured, the complete content of the image does not become visible again until the final version D.

By comparison, blending the successive objects with the initial low resolution version as in Fig. 6 means that the complete content of the image is visible (albeit at reduced resolution) at all times until the final rendering at D. The effect of the blending process can be seen in the way that the lighter areas of the low resolution version at A are darkened by blending with the dark background object at 6B (seen on its own in 5B) and then lightened by blending with the next, lighter object at C.

The blending of the approximate representation and the retrieved elements of graphical data may be accomplished by combining pixel values of the approximate representation and corresponding pixel values of the retrieved elements according to a predetermined weighting factor.

Pixel blending of this type is commonly referred to as "alpha blending"; i.e. the combination of two colours allowing for transparency effects in computer graphics, the weighting factor being referred to as "alpha". The value of alpha in the colour code ranges from 0.0 to 1.0, where, conventionally, 0.0 represents a fully transparent colour, and 1.0 represents a fully opaque colour.

The value of the resulting colour when colour Value1 is drawn over a background of colour Value0 is given by:

$$Value = Value0(1.0 - alpha) + Value1(alpha)$$

The display may be progressively updated in multiple steps until all of the elements of the graphical data have been retrieved to provide a complete, full quality on-screen rendering of the source data. The approximate representation may be removed entirely when the final object has been rendered (Fig. 4D), or at any other selected point during the progressive rendering of the source data.

The weighting factor alpha may be progressively adjusted at each update step to reduce the weighting of the approximate representation, so that the approximate representation gradually fades from view as more of the full-quality objects are rendered.

It will be understood that, in the context of "alpha blending", the question of whether the approximate representation is regarded as being "on top" of the other elements is largely arbitrary and subjective, since the relevant pixel values are combined according to the applicable alpha value to obtain a single, resultant pixel value. This terminology is used primarily to enable a more immediate understanding of the effect of the alpha blending process.

The display may be updated at predetermined intervals or at variable intervals as one or more graphical elements are retrieved.

In certain embodiments, the approximate representation may be replaced by successively better quality approximate representations at selected display updates.

The initial approximate representation, and any subsequent better quality approximate representations, may suitably comprise at least one of a text label, an icon and a reduced resolution bitmap of the graphical data.

As noted previously, the method is particularly suited for use where the source data represents an ordered stack of graphical elements. Referring to the example of Figs. 1 and 2, the approximate representation (20 in Fig. 4, see also Fig. 6A) would typically be retrieved and rendered first. The first object 12 would then be retrieved and prepared for rendering in a conventional manner. Prior to rendering, however, the first object 12 would be blended with the approximate representation 20 according to the selected alpha, and the combination rendered (as also in Fig. 6B). The second object 14 would then be retrieved and prepared for rendering, the combination of the first and second objects 12 and 14 being blended with the approximate representation 20 prior to rendering (Fig. 6B). This may be repeated for any arbitrary number of objects (e.g. Fig. 6C). At each stage the approximate representation 20 is displayed as a partially transparent overlay on top of the objects that have been retrieved and rendered so far. When the final object 16 is retrieved, the combination of the objects 12-16 may be rendered to provide the final, full quality display, without the approximate representation 20 (as in Fig. 6D).

The approximate representations utilised in the method may be obtained or derived in a number of ways. The source data may include the initial approximate representation (and any subsequent better quality approximate representations). That is, the approximate representations may be embedded in the source data when it is created or in a subsequent process. Alternatively, the initial approximate representation and any subsequent better quality approximate representations may be generated from the source data. For example, where the source data is streamed from a server to a client, the server may generate at least an initial approximate representation from the source data before it begins streaming the data to the client. Subsequent better quality approximate representations may be generated on the fly during streaming. Approximate representations generated in this way may be generated the first time the source data is accessed and stored for use whenever the data is accessed subsequently. Alternatively, the approximate representations could be generated and stored in advance of the data being accessed.

As noted, the method is particularly useful in client-server systems, especially for use with thin clients. In these cases the source data is stored in a server and the display is at a client connected to the server via any suitable network connection. Generally, the source data will be processed by the server and the graphical elements transmitted from the server to the client, but in some cases the source data may be transmitted from the server to the client and processed by the client.

Blending of the approximate representation and the graphical data may be accomplished by a variety of methods. For example, the approximate representation may be stored in a first buffer, the retrieved graphical data stored in a second buffer and the two blended and stored in a third buffer. Alternatively, the retrieved approximate representation may be stored in a first buffer, the retrieved graphical data stored in a second buffer and the two blended and stored in the first or second buffer. In a further alternative, the approximate representation and the retrieved graphical data are blended directly into a first buffer. The specific manner in which these blending processes may be performed will be apparent to those skilled in the art, given the present disclosure of the invention, and will not be described in detail herein.

The method may be implemented in any suitable data processing system, including client-server systems, in which case the server is typically adapted to store the source data and the client includes the visual display. The server may be adapted to process the source data and to transmit the graphical elements to the client (as would typically be the case for a thin client), or the server may be adapted to transmit the source data to the client and the client adapted to process the source data.

In a client server scenario where the source data is decoded by the server and decoded graphical objects are streamed to a client, a series of approximate representations can be embedded in the data stream, interspersed between sequences of one or more of the graphical objects. For example, a first approximate representation may comprise a text label, such as a file name, a next approximate representation may comprise an icon and further approximate representations may comprise reduced resolution bitmaps, of progressively improving quality, of the graphical data.

The following Table 1 illustrates an example of such a data stream and the manner on which it is decoded, in which G01 - G010 are the graphical objects and AR1 - AR3 are successive approximate representations.

**Table 1**

| Data Stream | Display |
| --- | --- |
| AR1 | AR1 |
| GO1 | GO1 blended with AR1 |
| GO2 | GO1+GO2 blended with AR1 |
| GO3 | GO1+GO2+GO3 blended with AR1 |
| AR2 | GO1+GO2+GO3 blended with AR2 |
| GO4 | GO1+GO2+GO3+GO4 blended with AR2 |
| GO5 | GO1+GO2+GO3+GO4+GO5 blended with AR2 |
| GO6 | GO1+GO2+GO3+GO4+GO5+GO6 blended with AR2 |
| GO7 | GO1+GO2+GO3+GO4+GO5+GO6+GO7 blended with AR2 |
| AR3 | GO1+GO2+GO3+GO4+GO5+GO6+GO7 blended with AR3 |
| GO8 | GO1+GO2+GO3+GO4+GO5+GO6+GO7+GO8 blended with AR3 |
| GO9 | GO1+GO2+GO3+GO4+GO5+GO6+GO7+G09 blended with AR3 |
| GO10 | GO1+GO2+GO3+GO4+GO5+GO6+GO7+GO9+GO10 |

It will be understood that the number of graphical objects, the number and nature of the approximate representations and the intervals at which the approximate representations are embedded in the data stream may vary in practice. The alpha factor used may be altered as previously described in any or all of the successive blending operations.

This technique allows progressively meaningful information to be presented on the display while the data is being streamed to the client. The approximate representations may be obtained or derived in any of the ways described above.

The blending and rendering of the approximate representation(s) and graphical objects as described herein may be performed by any suitably programmed data processing system. Digital document processing systems incorporating a shape processor, as described for example in WO01/79984 and WO01/80183, are particularly well suited for this purpose.

A shape processor of this type generally processes graphical objects to be displayed (including, in this case, the approximate representation(s)) in terms of a rectangular boundary box, the actual "shape" of the object bounded by the boundary box, (i.e. the outline shape of the object), "fill" (the data content of the object) and "alpha" (the transparency of the object), performs scaling and clipping appropriate to the required view and output device, and expresses the object in terms appropriate to the output device (typically in terms of pixels by scan conversion or the like, for most types of display device or printer). The individual objects processed by the shape processor are combined in a composite output frame.

The examples described above with reference to Figs. 1 to 4 assume that the final display content is assembled from an ordered stack of discrete, mutually-overlapping graphical objects. In practice, it will typically be the case that at least some objects will overlap one another to at least some extent. It is also possible that the final display content will comprise a number of non-overlapping blocks of display content. Each such block may consist of a single graphical object or a group of graphical objects. Where the content is being streamed from a server to a client, an initial approximate representation of the complete display may be provided as described above and, subsequently, individual, non-overlapping content blocks successively combined with the initial approximation until the final display is complete.

In such a scenario, the content of each block may be delivered "complete" in the data stream (i.e. each block is itself a single "graphical element" that comprises the final display content of the corresponding area of the final display). In that case, it may not be necessary for individual blocks to be blended with the initial approximation as the final display is built up: each block may simply replace the corresponding area of the initial approximation. However, if the content of each block is built up progressively from a number of individual elements, it may still be desirable for the individual elements of the block to be blended with the initial approximation at least until the content of that block is complete.

The invention encompasses data processing systems programmed to implement the methods described herein. In this respect, a data processing system adapted to display the graphical data is programmed to blend the approximate representation(s) with the graphical elements (objects) as described. In a client-server scenario, this function is performed by the client. The server is programmed to incorporate the approximate representation(s) into the graphical data streamed from the client to the server. In certain embodiments, as described, the server is programmed to generate the approximate representation(s) from the source data.

The invention further encompasses computer program products adapted to perform all or part of the methods described when executed. Such program products include applications adapted to generate and incorporate the approximate representation(s) into the source data, to generate the approximate representation(s) from the source data and to blend the approximate representation(s) with the graphical elements for display in the manner described.

Improvements and modifications may be incorporated without departing from the scope of the invention as defined in the appended claims.

**Claims**

1. A method of generating a visual display of graphical data in a client-server system, comprising:

   at the server, processing source data to generate a stream of graphical elements that are to be displayed, in combination, at the client, and transmitting said stream to the client;
   at the client, receiving said stream of graphical elements and progressively updating a display to display a combination of said graphical elements as they are received; wherein:

   at least one approximate visual representation of the combination of said graphical elements is included in said stream of graphical elements and displayed by the client during said progressive updating of the display.

2. A method as claimed in claim 1, wherein said stream of graphical elements includes a plurality of approximate visual representations of successively improving quality, interspersed among said graphical elements.

3. A method according to claim 1 or claim 2, wherein a first approximate visual representation is transmitted as a first element of said stream of graphical elements.

4. A method according to claim 3, wherein combinations of graphical elements received by the client are blended with a last-received one of said approximate visual representations.

5. A method according to claim 4, wherein blending presents the approximate representation as a partially transparent overlay on top of the combination of graphical elements.

6. A method according to claim 4 or claim 5, wherein the approximate representation and the graphical elements are blended by combining pixel values of the approximate representation and corresponding pixel values of the combined graphical elements according to a predetermined weighting factor.

7. A method according to any preceding claim, wherein the display is progressively updated in multiple steps until all of the graphical elements have been received by the client to provide a complete, full quality on-screen rendering of the graphical data.

8. A method according to claim 6, wherein the display is progressively updated in multiple steps until all of the graphical elements have been received by the client to provide a complete, full quality on-screen rendering of the graphical data, and wherein the weighting factor is progressively adjusted to reduce the weighting of the approximate representation.

9. A method according to claim 7 or claim 8, wherein the display is updated at predetermined intervals.

10. A method according to claim 7 or claim 8, wherein the display is updated at variable intervals as one or more graphical elements are retrieved.

11. A method according to any one of claims 7 to 10, wherein the approximate representation is replaced by successively better quality approximate representations at selected display updates.

12. A method according to any preceding claim, wherein the initial approximate representation and any subsequent better quality approximate representations comprise at least one of a text label, an icon and a reduced resolution bitmap of the graphical data.

13. A method according to any preceding claim, wherein the source data represents an ordered stack of graphical elements.

14. A method according to any preceding claim, wherein the source data includes the initial approximate representation and any subsequent better quality approximate representations.

15. A method according to any one of claims 1 to 13, wherein the initial approximate representation and any subsequent better quality approximate representations are generated from the source data.

16. A method according to any preceding claim, wherein the approximate representation is stored in a first buffer, the received graphical elements are stored in a second buffer and the two are blended and stored in a third buffer.

17. A method according to any one of claims 1 to 15, wherein the approximate representation is stored in a first buffer, the received graphical elements are stored in a second buffer and the two are blended and stored in the first or second buffer.

18. A method according to any one of claims 1 to 15, wherein the approximate representation and the received graphical elements are blended directly into a first buffer.

19. A method according to any preceding claim, wherein blending and rendering of the approximate representation and graphical elements are performed by a shape processor that processes graphical objects on the basis of a boundary box defining the boundary of an object, a shape defining the actual shape of the object bounded by the boundary box, the data content of the object and the transparency of the object.

20. A method according to claim 1, wherein an approximate visual representation is transmitted as a first element of said stream of graphical elements and displayed, wherein subsequent elements of said stream comprise non-overlapping blocks of display content, and wherein areas of the approximate representation are replaced by the corresponding blocks during said progressive updating of the display.

21. A client-server system adapted to implement the method of any of claims 1 to 20.

22. A server of a client-server system adapted to implement the method of any of claims 1 to 20.

23. A computer program product adapted to generate at least one approximate visual representation of graphical data as defined in relation to the method of any one of claims 1 to 20.

24. A computer program product adapted to blend an approximate visual representation of graphical data with elements of the graphical data as defined in relation to the method of any one of claims 1 to 20.

10

12

14

16

**Fig. 1**

10

**Fig. 2A**

10    12

**Fig. 2B**

10    12    14

**Fig. 2C**

10    12    14    16

TEXT

**Fig. 2D**

Z

16

14

12

18

10

**Fig. 3** (prior art)

EP 2 037 415 A1

**Fig. 4A**

**Fig. 4B**

**Fig. 4C**

**Fig. 4D**

10

Fig. 5
(Prior Art)

Fig. 6

A

B

C

D

A

B

C

D

**European Patent Office**

## EUROPEAN SEARCH REPORT

Application Number

EP 07 27 0053

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/110750 A (MICROSOFT CORP [US]) 24 November 2005 (2005-11-24) * abstract * * page 32, paragraph 15 - paragraph 26 * ----- | 1-24 | INV. G06T11/60 |
| A | WO 03/034272 A (PICSEL RES LTD [GB]; ANWAR MAJID [GB]; POLLOCK BRIAN RICHARD [GB]) 24 April 2003 (2003-04-24) * abstract * ----- | 1-24 | |

TECHNICAL FIELDS SEARCHED (IPC)

G06T

The present search report has been drawn up for all claims

| Place of search | Date of completion of the search | Examiner |
|---|---|---|
| Berlin | 8 April 2008 | González Arias, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 27 0053

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2008

| Patent document cited in search report | | Publication date | Patent family member(s) | | Publication date |
|---|---|---|---|---|---|
| WO 2005110750 | A | 24-11-2005 | AU | 2004319700 A1 | 24-11-2005 |
| | | | BR | PI0418700 A | 11-09-2007 |
| | | | CA | 2560106 A1 | 24-11-2005 |
| | | | CN | 1954314 A | 25-04-2007 |
| | | | EP | 1741040 A2 | 10-01-2007 |
| | | | JP | 2007535751 T | 06-12-2007 |
| | | | KR | 20070005687 A | 10-01-2007 |
| | | | US | 2005273701 A1 | 08-12-2005 |
| WO 03034272 | A | 24-04-2003 | AU | 2002330634 A1 | 28-04-2003 |
| | | | CN | 1568484 A | 19-01-2005 |
| | | | EP | 1435072 A2 | 07-07-2004 |
| | | | JP | 2005505860 T | 24-02-2005 |
| | | | US | 2005017986 A1 | 27-01-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0180178 A
- WO 0179984 A
- WO 0180183 A